(19) Europäisches Patentamt
European Patent Office
Office européen des brevets

(11) **EP 1 806 571 B1**

(12) **EUROPEAN PATENT SPECIFICATION**

(45) Date of publication and mention
of the grant of the patent:
**19.11.2008 Bulletin 2008/47**

(51) Int Cl.:
***G01M 11/08*** (2006.01)  *G02B 26/10* (2006.01)

(21) Application number: **06251801.4**

(22) Date of filing: **31.03.2006**

(54) **Apparatus and method for evaluating driving characteristics of scanner**

Vorrichtung und Verfahren zur Beurteilung der Ansteuereigenschaften eines Scanners

Appareil et procédé d'évaluation des caractéristiques de pilotage du scanner

(84) Designated Contracting States:
**DE FR GB**

(30) Priority: **06.01.2006 KR 20060001674**

(43) Date of publication of application:
**11.07.2007 Bulletin 2007/28**

(73) Proprietor: **Samsung Electronics Co., Ltd.
Suwon-si, Gyeonggi-Do (KR)**

(72) Inventors:
• **Cho, Yong-chul,
645-1404 Sinnamusil Sinwon Apt.
Suwon-si
Gyeonggi-do (KR)**
• **Chang, Seok-mo,
1-1406 Donga 1-danji Apt.
Incheon-si (KR)**

(74) Representative: **Greene, Simon Kenneth
Elkington and Fife LLP
Prospect House
8 Pembroke Road
Sevenoaks,
Kent TN13 1XR (GB)**

(56) References cited:
**WO-A-03/067509**  **US-A- 5 604 344**
**US-A- 6 052 197**  **US-A1- 2003 053 742**

• **ALAIN BOSSEBOEUF ET AL: "Characterization of the static and dynamic behaviour of M(O)EMS by optical techniques: status and trends" JOURNAL OF MICROMECHANICS & MICROENGINEERING, INSTITUTE OF PHYSICS PUBLISHING, BRISTOL, GB, vol. 13, no. 4, 1 July 2003 (2003-07-01), pages S23-S33, XP020068933 ISSN: 0960-1317**

**Description**

The present invention relates to an apparatus and method for evaluating driving characteristics of a scanner that projects light by driving a scanning mirror, and more particularly, to an apparatus and method for evaluating driving characteristics of a scanner by precisely measuring the driving angle of a scanning mirror rotating within a large angle range of about $\pm$ 12 degrees.

Recently-developed laser displays provides large and high-quality images using a laser. Such laser displays require a micro electro-mechanical system (MEMS) scanner having a scanning mirror operating at a large angle of about $\pm$12 degrees in order to provide two-dimensional large images using a laser beam projected from a laser.

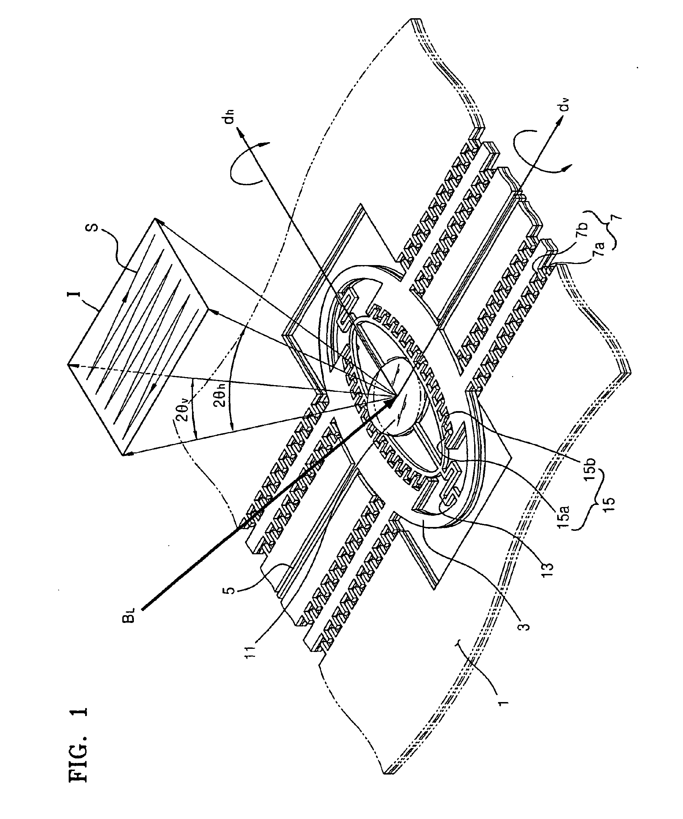

FIG. 1 is a perspective view schematically showing a conventional biaxial MEMS scanner.

Referring to FIG. 1, the biaxial MEMS scanner includes a base 1, an operating plate 3 capable of vertical driving $d_v$ with respect to the base 1, and a scanning mirror 11 capable of horizontal driving $d_h$ with respect to the operating plate 3 for forming an image I by reflecting an incident laser beam $B_L$ along a scanning line S in two dimension.

For the vertical driving $d_v$ of the operating plate 3 with respect to the base 1, both sides of the operating plate 3 are connected to the base 1 using torsion springs 5. Further, a first comb electrode structure 7 is formed from the base 1 to the operating plate 3. The first comb electrode structure 7 includes first stationary comb electrodes 7a formed into a comb shape on the base 1 and first movable comb electrodes 7b formed into a comb shape on the operating plate 3 in a staggered relationship with the first stationary comb electrodes 7a. Therefore, the operating plate 3 rotatably supported by the torsion springs 5 can be rotated within a predetermined rotating angle $\theta_v$ (0.5 x maximum vertical angle $2\theta_v$) with respect to a vertical direction of the image I by electrostatic force between the first stationary comb electrodes 7a and the first movable comb electrodes 7b. When no diving power is applied to the first comb electrode structure 7, the operating plate 3 returns to its original position by the torsion springs 5.

Further, for the horizontal driving $d_h$ of the scanning mirror 11 with respect to the operating plate 3, both ends of the scanning mirror 11 are connected to the operating plate 3 using resonance springs 13. A second comb electrode structure 15 is formed from the operating plate 3 to the scanning mirror 11. The second comb electrode structure 15 includes second stationary comb electrodes 15a formed into a comb shape on the operating plate 3 and second movable comb electrodes 15b formed into a comb shape on the scanning mirror 11 in a staggered relationship with the second stationary comb electrode 15a.

Therefore, the scanning mirror 11 rotatably supported by the resonance springs 13 can be rotated within a predetermined rotating angle $\theta_h$ (0.5 x maximum horizontal angle $2\theta_h$) with respect to a horizontal direction of the image I by electrostatic force between the second stationary comb electrodes 15a and the second movable comb electrodes 15b. When no diving power is applied to the second comb electrode structure 15, the scanning mirror 11 returns to its original position by the resonance springs 13.

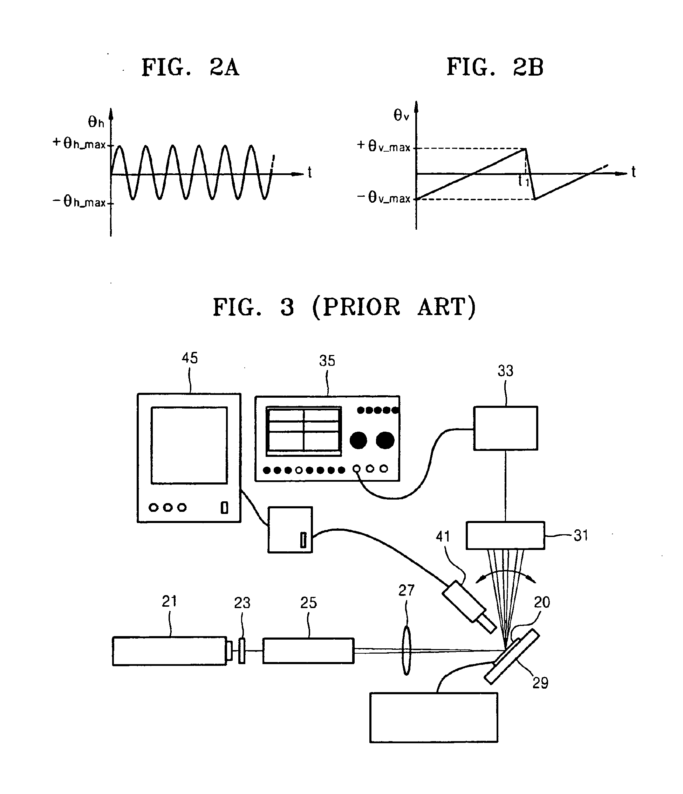

FIGS. 2A and 2B are graphs showing the horizontal driving $d_h$ and the vertical driving $d_v$ of the biaxial MEMS scanner depicted in FIG. 1.

Referring to FIG. 2A, the horizontal driving $d_h$ of the biaxial MEMS scanner is a resonance driving. That is, the horizontal driving angle $\theta_h$ of the mirror 11 varies periodically between a positive maximum horizontal angle $+\theta_{h\_max}$ and a negative maximum horizontal angle $-\theta_{h\_max}$ with time t.

Referring to FIG. 2B, the vertical driving of the biaxial MEMS scanner is a non-resonance driving. That is, the vertical driving angle $\theta_v$ of the operating plate 3 increases to a maximum vertical angle $+\theta_{v\_max}$ until an two-dimensional image is completely formed on a screen at time $t_1$, and then the operating plate 3 returns to its original position at an angle $-\theta_{v\_max}$. Here, the vertical driving angle $\theta_v$ may be increased and returned at period of 1/60 seconds.

The driving characteristics of the biaxial MEMS scanner are evaluated mainly using the flowing items: (1) maximum angle of horizontal resonance driving (e.g., $\pm\theta_{h\_max} = \pm12$ degrees), (2) maximum angle of vertical driving (e.g., $\pm\theta_{v\_max} = \pm 6.8°$), (3) horizontal and vertical resonance frequencies, (4) Q-factor, and (5) time response. Among the items, the first and second items are the most important than the other items. Thus, the first and second items are used prior to the others.

FIG. 3 is a schematic view showing an optical arrangement of a conventional scanner driving characteristic evaluation apparatus for evaluating the two-dimensional driving of a scanning mirror using a two-dimensional position-sensitive device (PSD).

Referring to FIG. 3, in the conventional scanner driving characteristic evaluation apparatus, a scanning mirror 20 to be evaluated is placed on a stage 29 inclined to an optical axis, and then a laser beam is projected to the scanning mirror 20. For this, the scanner driving characteristic evaluation apparatus includes a He-Ne laser 21 emitting a laser beam, an attenuator 23 attenuating the strength of the laser beam, a beam expander 25 expanding the attenuated laser beam, and an object lens 27 condensing the expanded laser beam onto the scanning mirror 20.

While varying the angle of the laser beam reflecting from the mirror 20 by driving the state 29 two-dimensionally, the reflected laser beam is received by the PSD 31. The optical signal of the received laser beam is converted into an electric signal (photoelectric conversion), and then converted into a voltage signal by a current-to-voltage converting circuit 33. The voltage signal is send to an oscilloscope 35 for measuring the displacement of the laser beam formed on the PSD 31. Here, an installation state of the scanning mirror 20 can be monitored using a microscope 41 installed above the scanning mirror 20 and a monitor 45 connected with the microscope 41.

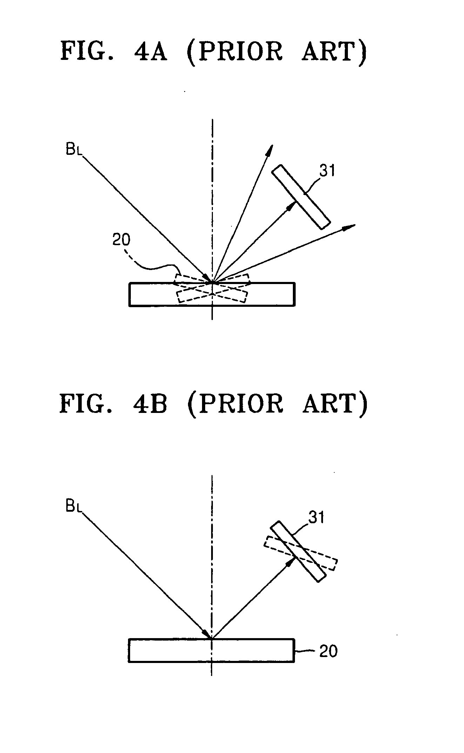

Meanwhile, since the scanning mirror 20 is inclined with respect to the optical path in the scanner driving characteristic evaluation apparatus, it is difficult to evaluate the scanning mirror 20 when the rotating angle of the scanning mirror 20 is large. In detail, since the linear characteristic of the PSD 31 is deteriorated when the size of the PSD 31 increases to a certain extent, the size of the PSD 31 is restricted. Therefore, the problem shown in FIG. 4A may arise. FIG. 4A shows the PSD 31 having a predetermined size and inclined at an angle to the scanning mirror 20. When the scanning mirror 20 is rotated as indicated by dashed line in FIG. 4A, a laser beam is reflected from the scanning mirror 20 within an angle range twice as large as the rotating angle range of the scanning mirror 20. Therefore, when the laser beam is reflected from the mirror 20 to the PSD 31, the laser beam may be reflected to the outside of the PSD 31 at a certain angle since the PSD 31 cannot have a sufficient size as described above.

Further, since the scanning mirror 20 is placed at an angle to the optical path in the scanner driving characteristic evaluation apparatus as shown in FIG. 4B, it is difficult to arrange and calibrate optical components for projecting a laser beam to the PSD 31 at an right angle.

Furthermore, the laser beam is blurred due to angular errors and defocusing caused by mechanical and optical deviations, causing position errors of the PSD 31. In addition, when the laser beam is incident on the scanning mirror 20 at an inclined angle, the path of the laser beam is distorted (pincushion error) according to the rotation angle of the scanning mirror, thereby lowing linearity in measurement.

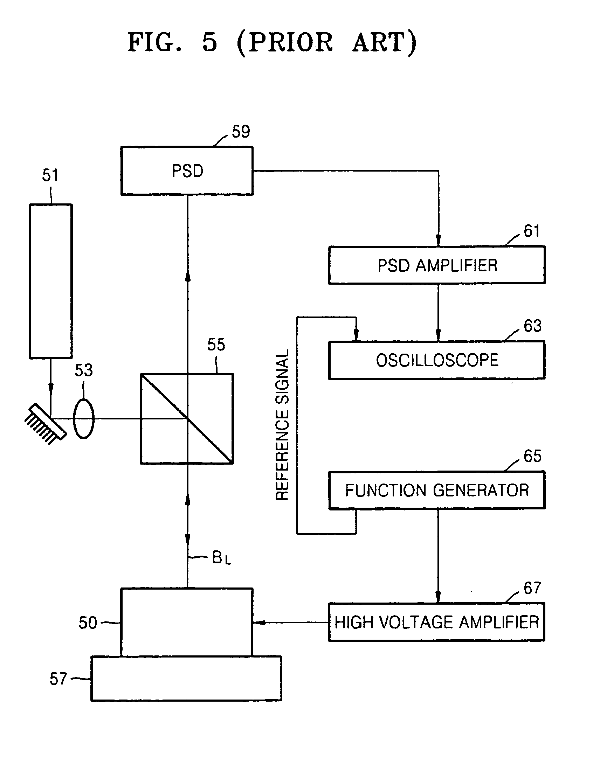

FIG. 5 is a schematic view showing an optical arrangement of another conventional scanner driving characteristic evaluation apparatus for evaluating the two-dimensional driving of a scanning mirror using a two-dimensional PSD.

Referring to FIG. 5, in the conventional scanner driving characteristic evaluation apparatus, a scanning mirror 50 to be evaluated is placed on a driving stage 57 inclined to an optical axis, and then a laser beam $B_L$ is projected to the scanning mirror 50. For this, the scanner driving characteristic evaluation apparatus includes a He-Ne laser 51 emitting a laser beam, a condensing lens 53, a polarizing beam splitter 55 transmitting or reflecting an incident laser beam depending on the polarization direction of the incident laser beam for changing the optical path of the laser beam, and a PSD 59.

A laser beam emitted from the He-Ne laser 51 is condensed by the condensing lens 53 and reflected by the polarizing beam splitter 55 to the scanning mirror 50. Next, the laser beam is reflected from the scanning mirror 50 is transmitted through the polarizing beam splitter 55 to the PSD 59. Then, the laser beam is photoelectrically converted into an electrical signal by the PSD 59.

Here, the scanning mirror 50 is driven by a high voltage amplifier 67 to which a signal generated from a function generator 65 is supplied. Further, the signal output from the PSD 59 is amplified by a PSD amplifier 61 and sent to an oscilloscope 63 together with a reference signal output from the function generator 65. Therefore, the transient response of the scanning mirror 50 can be easily measured using the oscilloscope 63. Furthermore, the scanning mirror 50 and the PSD 59 are perpendicular to the optical path, so that calibration can be easy performed when compared with the evaluation apparatus showing in FIG. 3.

Meanwhile, in this structure of the scanner driving characteristic evaluation apparatus, if the scanning mirror 50 rotates more than a certain angle, a laser beam reflected from the scanning mirror 50 is not projected to the PSD 59. That is, it is difficult to evaluate the scanning mirror 50 when the rotation angle of the scanning mirror 50 is out of an angle range of about $\pm 12$ degrees. Further, it is also difficult to determine whether the laser beam is focused or not.

An apparatus for the testing of micro-machined torsional mirrors at the wafer level is described in United States Patent Number 6,052,197.

United States Patent Application Publication Number US 2003/0053742 presents a mirror angle detecting device.

An autofocussing microscope having a pattern imaging system is disclosed in United States Patent Number 5,604,344.

The present invention provides an apparatus and method for evaluating driving characteristics of a scanner, the apparatus and method being designed such that driving angle can be precisely measured in real time from a scanning mirror rotating within a large driving angle range of about $\pm 12$ degrees.

According to an aspect of the present invention, there is provided an apparatus according to claim 1.

According to another aspect of the present invention, there is provided a method according to claim 10

The above and other features and advantages of the present invention will become more apparent by describing in detail exemplary embodiments thereof with reference to the attached drawings in which:

FIG. 1 is a perspective view schematically showing a conventional biaxial MEMS scanner;
FIGS. 2A and 2B are graphs showing horizontal driving and vertical driving of the biaxial MEMS scanner depicted in FIG. 1, respectively;

FIG. 3 is a schematic view showing an optical arrangement of a conventional scanner driving characteristic evaluation apparatus for evaluating two-dimensional driving of a scanning mirror using a two-dimensional position-sensitive device (PSD);

FIGS. 4A and 4B show a PSD disposed at an angle to a scanning mirror;

FIG. 5 is a schematic view showing an optical arrangement of another conventional scanner driving characteristic evaluation apparatus for evaluating the two-dimensional driving of a scanning mirror using a two-dimensional PSD;

FIG. 6 is a schematic view showing an optical arrangement of an apparatus for evaluating driving characteristics of a scanner according to an embodiment of the present invention;

FIG. 7 is a schematic view showing variation of an optical path of a laser beam incident on and reflected from a scanning mirror depicted in FIG. 6;

FIGS. 8 and 9 are schematic views showing measurement of two-dimensional dynamic operation of a scanning mirror by means of a PSD according to the present invention;

FIG. 10 shows a circuit outputting an analog voltage using a signal detected by a PSD in proportion to a coordinate (x, y) of a beam spot according to the present invention;

FIG. 11 is a flowchart for compensating for measurement errors of a PSD according to the present invention;

FIG. 12 is a flowchart for adjusting a focal point of an object lens according to the present invention; and

FIG. 13 shows a beam spot formed on a camera and a Gaussian fitting curve according to the present invention.

An apparatus and method for evaluating driving characteristics of a scanner will now be described more fully with reference to the accompanying drawings, in which exemplary embodiments of the invention are shown.

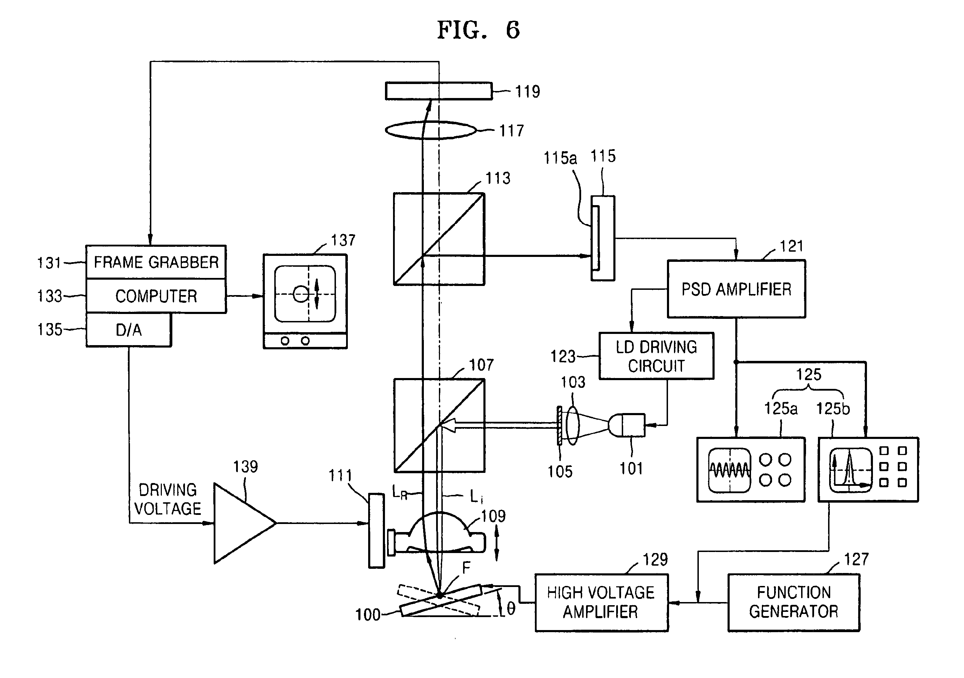

FIG. 6 is a schematic view showing an optical arrangement of an apparatus for evaluating driving characteristics of a scanner according to an embodiment of the present invention.

Referring to FIG. 6, the evaluation apparatus of the present invention evaluates the driving characteristics of a scanning mirror 100 according to change of horizontal and vertical rotating angles of the scanning mirror 100. The evaluation apparatus includes a light source 101 emitting a light beam, an object lens 109, an actuator 111 driving the object lens 109, a position-sensitive device (PSD) 115, and a signal processing unit performing a predetermined operation on a signal detected from the PSD 115.

The scanning mirror 100 receives a voltage signal generated by a function generator 127 and amplified by a high voltage amplifier 129 to rotate horizontally and vertically. The voltage signal generated by the function generator 127 may have an AC waveform as shown in FIGS. 2A and 2B. That is, the scanning mirror 100 may be horizontally driven in the form of a sine AC wave as shown in FIG. 2A, and vertically driven in the form of a saw-tooth AC wave as shown in FIG. 2B.

The light source 101 may emit a red beam that can be easily detected by the PSD 115 and a camera 119 (described later). For this, the light source 101 may include a light emitting diode (LED) or a laser diode.

The object lens 109 is disposed between the light source 101 and the scanning mirror 100. The object lens 109 may have a numeral aperture of about 0.5 or more, a magnification of x50, and a working distance of 10 mm or more. Therefore, an optical system having an optical angle of $\pm$ 24 degrees or more can be constructed for evaluating the scanning mirror 100 even when the driving angle range of the scanning mirror 100 is equal to or exceed a range of about $\pm$12 degrees.

The actuator 111 drives the object lens 109 to place the focal point F of the object lens 109 on the scanning mirror 100. The actuator 111 is designed to slightly move the object lens 109 along an optical axis. For this, the actuator 111 may include a piezoelectric driving unit or a small-sized linear motor. Therefore, the focal point F of the object lens 109 can be placed on the scanning mirror to be evaluated by manually or automatically driving the object lens 109 using the actuator 111. The automatic focusing structure and method will be described later.

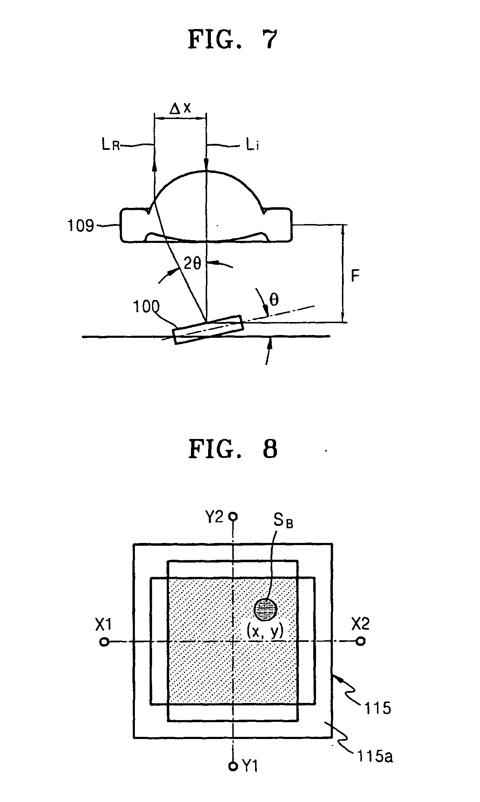

Referring to FIG. 7, when the object lens 109 and the scanning mirror 100 are disposed as described above, an incident beam $L_i$ onto the object lens 109 from the light source 101 is parallel with a reflected beam $L_R$ from the scanning mirror through the object lens 109, regardless of a rotating angle $\theta$ of the scanning mirror 100. That is, the incident beam $L_i$ is reflected by the scanning mirror 100 at the focal point F of the object lens 109 located on the scanning mirror 100. Here, if the scanning mirror 100 is rotated by an angle $\theta$, the reflected beam $L_R$ from the scanning mirror 100 makes a double angle $2\theta$ with the incident beam $L_i$, and then the reflected beam $L_R$ becomes parallel with the incident beam $L_i$ after passing through the object lens 109.

Once the incident beam $L_i$ and the reflected beam $L_R$ becomes parallel as described above, the parallel relationship is maintained regardless of the rotating angle $\theta$ of the scanning mirror 100 though the distance $\Delta x$ between the two parallel beams varies according to the rotating angle $\theta$ of the scanning mirror 100. Here, the distance $\Delta x$ and the double angle $2\theta$ satisfy Equation 1 below.

## [Equation 1]

$$2\theta = \tan^{-1}(\Delta x/F)$$

Therefore, a beam incident on the PSD 115 can be substantially perpendicular to a light-receiving surface 115a of the PSD 115 regardless of the rotating angle θ of the scanning mirror 100. Thus, the problems described with reference to FIG. 4A can be eliminated. That is, even when the scanning mirror 100 is rotated to an angle outside a certain range (e.g., $\pm$ 12 degrees), the driving characteristics of the scanning mirror 100 can be evaluated using a PSD having the same size as the PSD employed in the conventional evaluation apparatus. Further, the optical path distortion (pincushion error) of the beam does not occur, so that linearity in measurement using the PSD 115 can be maintained.

Also, according to an embodiment of the present invention, the evaluation apparatus may further include a first optical path changing member 107 to change the optical path of an incident beam. The first optical path changing member 107 is disposed between the light source 101 and the object lens 109. The first optical path changing member 107 directs a beam from the light source 101 to the object lens 109 and directs a beam from the scanning mirror 100 to the PSD 115. The first optical path changing member 107 may be a beam splitter that transmits a portion of an incident beam and reflects the remaining portion of the incident beam based on a predetermined light quantity ratio, or may be a polarizing beam splitter that transmits an incident beam having a certain polarization direction and reflects an incident beam having a different polarization direction. Further, the first optical path changing member 107 may be a cube type beam splitter or a plate type beam splitter.

The evaluation apparatus may further include a collimator 103 and a pin hole 105 between the light source 101 and the first optical path changing member 107. The collimator 103 condenses a beam emitted from the light source 101 to make the beam parallel. The pin hole 105 is disposed between the collimator 103 and the first optical path changing member 107 to restrict the size of the beam passed through the collimator 103 for projecting the beam onto the scanning mirror 100 at a small diameter.

The evaluation apparatus may further include the camera 119 receiving a portion of the reflected beam $L_R$ from the scanning mirror 100 for measuring dynamic and static states of the reflected beam $L_R$, and a monitor 137 displaying the dynamic and static states of the reflected beam $L_R$ measured by the camera 119. In this case, the evaluation apparatus may further include a second optical path changing member 113 among the first optical path changing member 107, the PSD 115, and the camera 119. The second optical path changing member 113 directs an incident beam from the first optical path changing member 107 to the PSD 115 and the camera 119. Therefore, the beam divided by the second optical path changing member 113 reaches both the PSD 115 and the camera 119.

The evaluation apparatus may further include a condensing lens 117 between the second optical path changing member 113 and the camera 119 for condensing a parallel beam.

The camera 119 includes a charge-coupled device (CCD) and detects a beam reflected from the scanning mirror 100. That is, the camera 119 is used for monitoring horizontal and vertical characteristics of the beam reflected from the scanning mirror 100. When the scanning mirror 100 is driven at a low speed (less than 15 Hz), the center coordinate of a beam spot formed on the camera 119 can be measured using the camera 119, such that vertical driving angle of the scanning mirror 100 can be detected. Therefore, the automatic focusing of the object lens 109 and measurement error compensation for the PSD 115 can be performed based on the information obtained using the camera 119.

For this, the evaluation apparatus further includes a controller. The controller receives a signal output from the camera 119 to display the state of the reflected beam on the monitor 137, and to control the actuator 111 according to the state of the reflected beam. The controller includes a frame grabber 131, a computer 133, a D/A converter 135 converting an input signal into an analog signal, and an amplifier 139 amplifying a driving voltage output from the D/A converter 135 for the actuator 111. The frame grabber 131 converts an image signal output from the camera 119 into a computer-readable signal for the computer 133.

Since the evaluation apparatus further includes the controller, the actuator 111 can be automatically controlled using the state of the reflected beam measured by the camera 119 to place the focal point F of the object lens 109 precisely on a reflecting point of the scanning mirror 100.

The PSD 115 has a 100-KHz bandwidth approximately and a good response at a high speed, such that the dynamic operation of the scanning mirror 100 can be measured up to 100 KHz. For example, the PSD 115 may be a duo lateral type two-dimensional PSD sensor manufactured by Hamamatsu company and having a high linearity and high frequency AC response.

A measurement mechanism will now be described for measuring the dynamic operation of the scanning mirror 100 using the PSD 115 with reference to FIGS. 8 through 10.

Referring to FIG. 8, for measuring two-dimensional dynamic operation of the scanning mirror 100, the PSD 115 includes two anodes terminals X1 and X2 measuring x-axis dynamic operation of the scanning mirror 100, and two cathode terminals Y1 and Y2 measuring y-axis dynamic operation of the scanning mirror 100. The PSD 115 obtains the coordinate of a beam spot $S_B$ formed on the light-receiving surface 115a thereof by processing signals output from the anode terminals X1 and X2 and the cathode terminals Y1 and Y2.

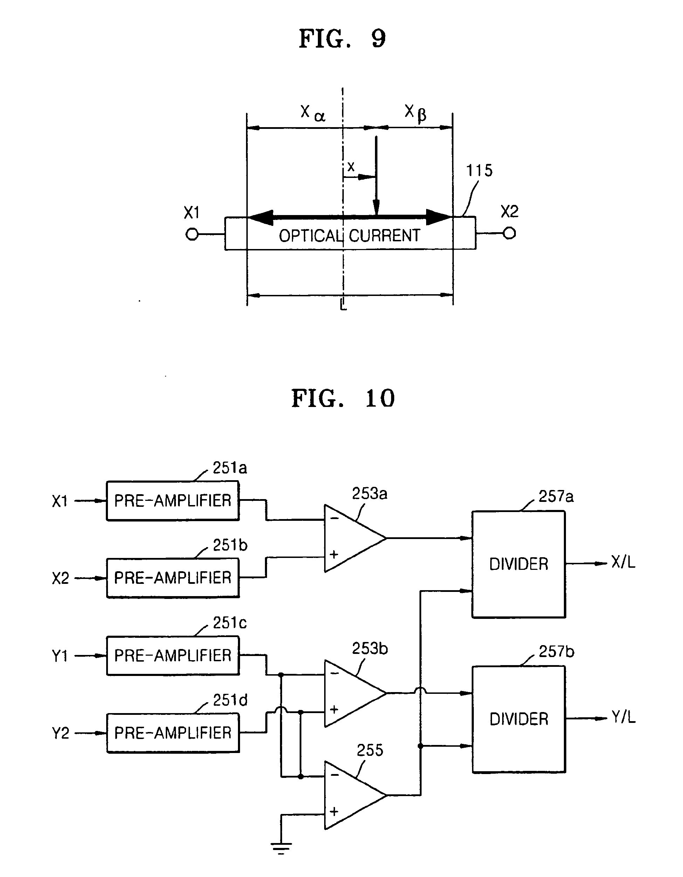

FIG. 9 shows x-axis coordinate calculation according to the x-axis dynamic displacement of a beam spot.

Referring to FIG. 9, when a beam spot is spaced a distance (x) from a center line (denoted by x-axis lengths $X_\alpha$ and $X_\beta$), optical currents $I_{X1}$ and $I_{X2}$ of the anode terminals X1 and X2 are reverse proportional to the x-axis lengths $X_\alpha$ and $X_\beta$, respectively, as shown in Equation 2. Therefore, the x-axis coordinate of the beam spot can be calculated using Equations 2 and 3 below.

$$[\text{Equation 2}]$$

$$I_{X1} = k \cdot I_o \left( \frac{1}{X_\alpha} \right)$$

$$I_{X2} = k \cdot I_o \left( \frac{1}{X_\beta} \right)$$

where k denotes a constant value, and $I_o$ denotes the irradiance of a light source.

$$[\text{Equation 3}]$$

$$\frac{I_{X2} - I_{X1}}{I_{X2} + I_{X1}} = \frac{2x}{L}$$

where L denotes the length of a sensing area and is equal to the sum of $X_\alpha$ and $X_\beta$ (= $X_\alpha + X_\beta$).

The y-axis coordinate of the beam spot can be calculated in the same way as the x-axis coordinate, and Equation 3 can be expressed using a circuit as shown in FIG. 10.

Referring to FIG. 10, signals detected by the PSD 115 are output through the anode terminals X1 and X2 and the cathode terminals Y1 and Y2. The output signals are amplified by first through fourth pre-amplifier 251a, 251b, 251c, and 251d, and sent to first and second differential amplifier 253a and 253b for amplifying the differences between the amplified signals. Further, portions of the signals amplified by the third and fourth pre-amplifiers 251c and 251d are added by an adder 255. Then, the signal output from the first differential amplifier 253a and the signal output from the adder 255 are sent to a first divider 257a and output in the form of x/L. Further, the signal output from the second differential amplifier 253b and the signal output from the adder 255 are sent to a second divider 257b and output in the form of y/L. Therefore, an analog voltage corresponding to the coordinate (x, y) of the beam spot can be output from the PSD 115.

Referring to FIG. 6, the signal processing unit amplifies the analog voltage output of the PSD 115. The signal processing unit includes a PSD amplifier 121 and a measuring unit 125. The PSD amplifier 121 sends a feedback signal to a light source driving circuit (i.e., an LD driving circuit 123) for controlling the power of the beam. In this configuration, the signal output from the PSD 115 can be processed using a modulation scheme such as a pulse width modulation or an amplitude modulation by modulating and synchronizing the beam emitted from the light source 101. In this case, the signal processing unit can minimize the influence of external light.

Further, the signal processing unit provides the coordinate (x, y) of the beam spot formed on the PSD 115 according to the driving angle of the scanning mirror 100 by using the measuring unit 125. The measuring unit 125 receives the signal output from the PSD amplifier 121 to measure the driving characteristics of the scamming mirror 100. For this, the measuring unit 125 may include an oscilloscope 125a and a signal analyzer 125b. The oscilloscope 125a receives the signal output from the PSD amplifier 121 to measure a time response based on the waveform of received signal. The time response is useful for analyzing the maximum horizontal and vertical rotation angles and abnormal behaviors of the scanning mirror 100. Here, the maximum rotation angle of the scanning mirror 100 occurs during a resonance driving of the scanning mirror 100, the maximum rotation angle can be calculated by converting a corresponding voltage into an angle.

The signal analyzer 125b calculates horizontal and vertical resonance frequencies and a Q value of the scanning mirror 100 by analyzing the signal output from the PSD amplifier 121. That is, the signal analyzer 125b can calculate the resonance frequencies and Q factor by sine sweeping the transfer function of the signal output of the PSD 115 with respect to a voltage applied for driving the scanning mirror 100.

As described above, since the evaluation apparatus includes the PSD 115 and the signal processing unit, the evaluation apparatus can evaluate whether the scanning mirror 200 is defective or not by determining whether the measured horizontal and vertical resonance frequencies are within allowable ranges, and by determining whether the maximum rotation angle of the scanning mirror 100 is less than an allowable maximum angle. Further, it can be determined whether the signal output of the PSD 115 is proportional to an input signal by using the measured time response.

A method for evaluating driving characteristics of a scanner will now be described in detail with reference to FIGS. 6, 11,12, and 13 according to an embodiment of the present invention.

Referring to FIG. 6, the method includes projecting a beam onto the scanning mirror 100, driving the object lens 109 for placing the focal point F of the object lens 109 on the scanning mirror 100, measuring the driving characteristics of the scanning mirror 100, compensating for measurement errors of the PSD 115, and adjusting the focal point F of the object lens 109.

In projecting a beam onto the scanning mirror 100, a diffusion beam emitted from the light source 101 is condensed by the collimator 103 into a parallel beam, and only a portion of the parallel beam passes through the pin hole 105 toward the object lens 109. The object lens 109 condenses the beam from the light source 101 onto the scanning mirror 100. The beam condensed onto the scanning mirror 100 is reflected from the scanning mirror 100 at an angle determined by the rotation angle of the scanning mirror 100. If the rotation angle of the scanning mirror 100 is $\theta$, the angle between the reflecting beam and the incident beam is $2\theta$.

In driving the object lens 109, the beam reflected from the scanning mirror 100 and condensed by the object lens 109 becomes parallel to the incident beam on the object lens 109 from the light source 101. For this, the actuator 111 drives the object lens 109 for placing the focal point F of the object lens 109 on a position of the scanning mirror 100 where the beam is incident. Owing to this positional relationship between the scanning mirror 100 and the object lens 109, the incident beam and the reflecting beam can be parallel with each other regardless of the driving angle of the scanning mirror 100. Only the distance $\Delta x$ between the incident beam and the reflecting beam varies according to the driving angle $\theta$ of the scanning mirror 100. Therefore, the driving angle of the scanning mirror 100 can be calculated from the distance $\Delta x$ using Equation 1 expressing the relationship between the distance $\Delta x$ and the driving angle of the scanning mirror 100.

In measuring the driving characteristics of the scanning mirror 100, the PSD 115 and the camera 119 receives the beam reflected from the scanning mirror 100 and processes the received beam. Particularly, maximum horizontal and vertical driving angles, time response, and a Q factor can be measured by processing the signal output from the PSD 115 using the signal processing unit. This measurement is already described above. Thus, detail description thereof will be omitted.

Meanwhile, although the PSD 115 can precisely measure the x-axis and y-axis displacements of the beam reflected from the scanning mirror 100, the PSD 115 has a relatively bad linearity and a low precision in measuring the center of a beam spot when compared with the camera 119 having the CCD, thereby causing measurement errors. Further, external factors such as electrical noise and temperature change may cause a slight drift in the output signal of the PSD 115.

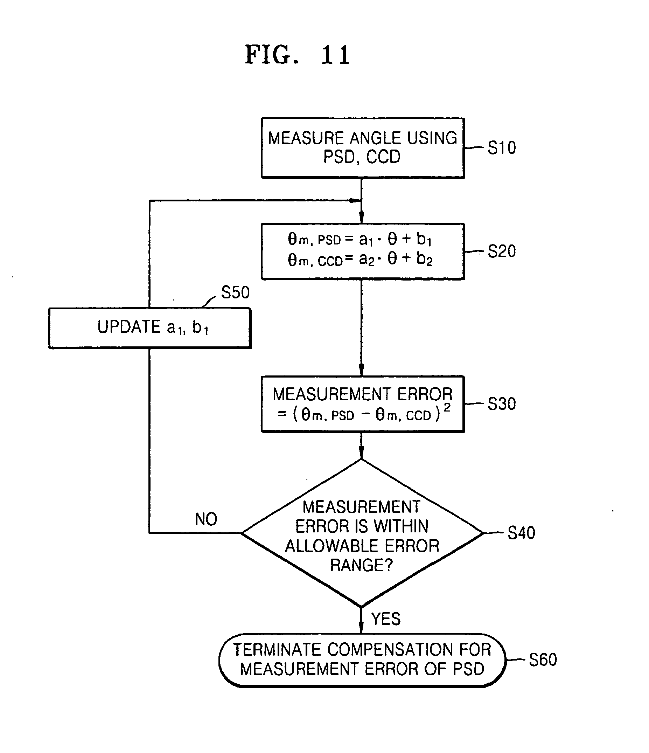

Meanwhile, the measurement errors of the PSD 115 can be compensated for. The compensation operation will now be described in detail with reference to FIGS. 6 and 11.

FIG. 11 is a flowchart for compensating for a measurement error of the PSD 115.

In operation S10, the driving angle of the scanning mirror 100 is measured from the positions of beam spots formed on the camera 119 and the PSD 115.

In operation S20, the measured driving angles of the scanning mirror 100 are calibrated into an actual driving angle of the scanning mirror 100 using a first order function shown in Equation 4.

$$[\text{Equation 4}]$$

$$\theta_{m,\,PSD} = a_1 \cdot \theta + b_1$$

$$\theta_{m,\,CCD} = a_2 \cdot \theta + b_2$$

where $\theta_{m,\,PSD}$ and $\theta_{m,\,CCD}$ denote calibrated values of the driving angles measured by the PSD 115 and the camera 119, and $a_1$, $b_1$, $a_2$, $b_2$ denote parameters, and $\theta$ denotes the actual driving angle of the scanning mirror 100.

In operation S30, the first calibrated values of the measured driving angles of the scanning mirror 100 by the PSD 115 and the camera 119 are compared with each other. In operation S40, it is determined whether the measurement error of the PSD 115 is within an allowable error range. Here, the measurement error may be expressed by Equation 5.

[Equation 5]

$$\text{Measurement error} = (\theta_{m,\,PSD} - \theta_{m,\,CCD})^2$$

If the measurement error is outside the allowable error range, the parameters $a_1$ and $b_1$ are updated (operation S50), and operations S20 through S40 are repeated for performing the calibration and the measurement error determination again. Meanwhile, if the measurement error is within the allowable error range, the flowchart for compensating for the measurement error of the PSD 115 ends (operation S60).

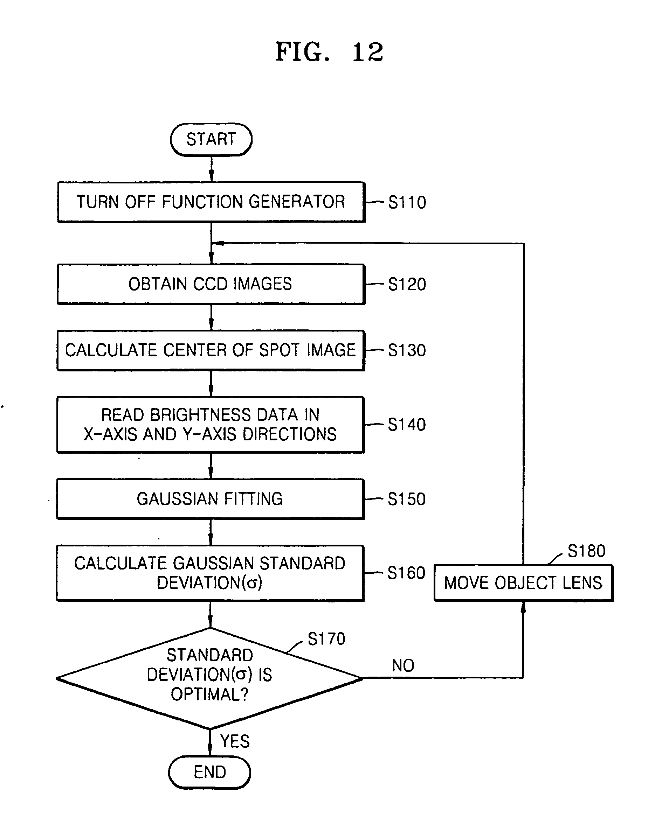

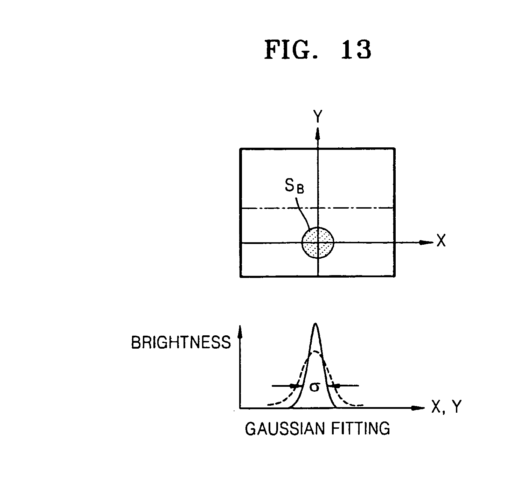

Adjusting the focal point of the object lens 109 will now be described in detail with reference to FIGS. 12 and 13.

In operation S120, a CCD image is obtained by receiving a beam reflected from the scanning mirror 100 using the camera 119. Here, operation S110 may be performed prior to operation S120 for turning off the function generator 127 to interrupt a driving signal to the scanning mirror 100.

In operation S130, the center of the obtained spot image $S_B$ (see FIG. 13) is calculated. In operation S140, brightness data are read from the spot image $S_B$ in x-axis and y-axis directions. In operation S150, the read brightness data are Gaussian fitted, and in operation S160 a standard deviation $\sigma$ is calculated. In operation S170, it is determined whether the calculated standard deviation $\sigma$ is within an optimal deviation range. That is, it is determined whether the focal point of the object lens 109 is placed on the scanning mirror 100 in operation S170. If the focal point of the object lens 109 is not placed on the scanning mirror 100, the object lens 109 is moved using the actuator 111 to place the focal point of the object lens 109 on a reflecting surface of the scanning mirror 100. Operations S120 through S170 may be repeated until the focal point adjustment is completed.

As described above, according to the present invention, the focal point of the object lens is adjusted to be placed on the reflecting surface of the scanning mirror, such that the beam reflecting from the scanning mirror can be kept in parallel with the incident beam onto the scanning mirror regardless of the driving angle of the scanning mirror. Therefore, the driving characteristics of the scanning mirror can be precisely evaluated in real time without increasing the size of the PSD larger than a conventional PSD even when the driving angle of the scanning mirror is outside the angle range of about $\pm$ 12 degrees.

Further, the incident beam onto the PSD is substantially perpendicular to the beam receiving surface of the PSD, so that the pincushion distortion error can be prevented.

Furthermore, the driving angle of the scanning mirror is measured using the PSD and the camera, and the measurement error of the PSD is compensated for based on the measured driving angles by the PSD and the camera, so that the driving characteristics of the scanning mirror can be more precisely evaluated.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An apparatus for evaluating driving characteristics of a scanner according to changes in horizontal and vertical rotation angles of a scanning mirror (100), the apparatus comprising:

   a light source (101) arranged to emit a light beam;
   an object lens (109) disposed between the scanning mirror (100) and the light source (101) and arranged such that a focal point is placed on the scanning mirror (100);
   a position-sensitive device (115), PSD, arranged to receive the beam reflected from the scanning mirror (100) and passed through the object lens for detecting the rotation angles of the scanning mirror (100);
   a first beam splitter (107) disposed between the light source (101) and the object lens (109) for changing an optical path of the beam incident thereon; and
   a signal processing unit processing a signal detected by the position-sensitive device (115),
   wherein the beam reflected from the scanning mirror (100) and passed through the object lens is arranged to be parallel with the beam emitted from the light source (101) and incident onto the object lens regardless of the rotation angles of the scanning mirror (100), and **characterized by** further comprising:

   a camera (119) arranged to receive a portion of the beam reflected from the scanning mirror (100) and passed through the object lens (109) for detecting dynamic and static states of the beam; and
   a controller arranged to receive the states of the beam detected by the camera (119), and to detect a rotation angle of the scanning mirror (100), thereby enabling focusing of the object lens (109) based on the detected state of the beam and compensation of measurement error of the PSD (115) based on the angles of the scanning mirror (100) detected by the camera (119) and the PSD (115).

2. The apparatus of claim 1, further comprising an actuator (111) arranged to drive the object lens (109) such that the focal point of the object lens (109) can be placed on the scanning mirror.

3. The apparatus of claim 1 or 2, further comprising:

   a monitor (137) arranged to display the states of the beam detected by the camera (119).

4. The apparatus of claim 1, 2 or 3, wherein the controller is further arranged to control the actuator (111) based on the detected state of the beam such that the focal point of the object lens (109) can be placed on the scanning mirror.

5. The apparatus of any preceding claim, further comprising a second beam splitter (113) disposed among the first optical path changing member (107), the position-sensitive device (115), and the camera (119) for directing the beam reflected from the scanning mirror (100) to the position-sensitive device and the camera (119).

6. The apparatus of claim 5, further comprising a condensing lens (117) disposed between the second beam splitter (113) and the camera (119) for condensing the beam incident thereon.

7. The apparatus of any of claims 1 to 6, further comprising:

   a collimator (103) arranged to condense the beam emitted from the light source (100) for making the beam parallel; and
   a pin hole (105) arranged to restrict the beam passed through the collimator (103) to a predetermined size.

8. The apparatus of any of claims 1 to 7, wherein the signal processing unit comprises:

   a position-sensitive device amplifier (121) arranged to amplify a signal obtained by photoelectric conversion in the position-sensitive device, the position-sensitive device amplifier (121) arranged to send a feedback signal to a circuit driving the light source (101) for controlling power of the beam; and
   a measuring unit (125) arranged to receive a signal output from the position-sensitive device amplifier (121) for measuring the driving characteristics of the scanning mirror (100).

9. The apparatus of claim 8, wherein the measuring unit (125) comprises:

   an oscilloscope (125a) arranged to receive the signal output from the position-sensitive device amplifier (121) for measuring the horizontal and vertical rotation angles and a time response of the scanning mirror (100) using a waveform of the received signal; and
   a signal analyzer (125b) arranged to analyze the signal output of the position-sensitive device amplifier (121) for calculating horizontal and vertical resonance frequencies and a Q factor of the scanning mirror (100).

10. A method of evaluating driving characteristics of a scanner according to changes in horizontal and vertical rotation angles of a scanning mirror (100), the method comprising:

    condensing a beam emitted from a light source (101) onto the scanning mirror (100) using an object lens (109);
    driving the object lens (109) for placing a focal point of the object lens (109) on the scanning mirror (100) so as to adjust the beam reflected from the scanning mirror (100) to be parallel with the beam emitted from the light source (101) and incident onto the object lens (109); and
    receiving the beam reflected from the scanning mirror (100) using a position-sensitive device (115) and a camera (119) to measure the driving characteristics of the scanning mirror (100) and **characterized by** further comprising the steps of: adjusting the focal point of the object lens (109) using a signal output from the camera (119) in response to the beam; and
    compensating for a measurement error of the PSD (115) by measuring the driving angles of the scanning mirror (100) using the camera (119) and the position-sensitive device (115), respectively, and calibrating the measured driving angles of the scanning mirror (100) into an actual driving angle of the scanning mirror (100).

11. The method of claim 10, wherein the compensating for the measurement error of the position-sensitive device (115) further comprises:

calibrating the measured driving angles of the scanning mirror (100) into an actual driving angle of the scanning mirror (100) using a first order function;

comparing the first calibrated values of the measured driving angles of the scanning mirror (100) by the position-sensitive device (115) and the camera (119) to determine whether the measurement error of the position-sensitive device (115) is within a predetermined allowable error range; and

if the measurement error is outside the predetermined allowable error range, updating parameters of the first order function and repeating the steps of calibrating and comparing.

12. The method of claim 10 or 11, wherein the adjusting of the focal point of the object lens (109) comprises:

obtaining a charge-ccupled device image by receiving a beam reflected from the scanning mirror (100) using the camera (119);

calculating a center of the obtained charge-coupled device image and reading brightness data from the obtained charge-coupled device image;

calculating a standard deviation of the read brightness data through Gaussian fitting to determine whether the focal point of the object lens (109) is placed on the scanning mirror (100); and

if the focal point of the object lens (109) is not placed on the scanning mirror (100), driving the object lens (109) for placing the focal point of the object lens (109) on the scanning mirror (100).

13. The method of claim 12, wherein the adjusting of the focal point of the object lens (109) further comprises turning off a function generator to interrupt a driving signal to the scanning mirror (100) prior to the obtaining of the charge-coupled device image.

**Patentansprüche**

1. Vorrichtung zum Beurteilen der Ansteuerungseigenschaften eines Scanners anhand von Änderungen der horizontalen und vertikalen Drehwinkel eines Abtastspiegels (100), wobei die Vorrichtung Folgendes umfasst:

eine Lichtquelle (101) zum Aussenden eines Lichtstrahls;

eine Objektlinse (109), die zwischen dem Abtastspiegel (100) und der Lichtquelle (101) positioniert und so angeordnet ist, dass ein Brennpunkt auf den Abtastspiegel (100) gesetzt wird;

ein lageempfindliches Gerät (115) (PSD) zum Empfangen des vom Abtastspiegel (100) reflektierten Strahls, der durch die Objektlinse geleitet wird, um die Rotationswinkel des Abtastspiegels (100) zu erfassen;

einen ersten Strahlteiler (107), der zwischen der Lichtquelle (101) und der Objektlinse (109) angeordnet ist, um den Lichtweg des darauf fallenden Strahls zu verändern; und

eine Signalverarbeitungseinheit zum Verarbeiten eines von dem lageempfindlichen Gerät (115) erfassten Signals,

wobei der vom Abtastspiegel (100) reflektierte Strahl, der durch die Objektlinse geleitet wird, parallel zu dem von der Lichtquelle (101) ausgesendeten Strahl verläuft und unabhängig von den Drehwinkeln des Abtastspiegels (100) auf die Objektlinse fällt, und **dadurch gekennzeichnet, dass** die Vorrichtung ferner Folgendes umfasst:

eine Kamera (119) zum Empfangen eines Teils des vom Abtastspiegel (100) reflektierten und durch die Objektlinse (109) geleiteten Strahls zum Erfassen der dynamischen statischen Zustände des Strahls; und

eine Steuerung zum Empfangen der Zustände des von der Kamera (119) erfassten Strahls und zum Erkennen eines Drehwinkels des Abtastspiegels (100), um **dadurch** eine Fokussierung der Objektlinse (109) auf der Basis des erfassten Zustands des Strahls und eine Kompensation von Messfehlern des PSD (115) auf der Basis der von der Kamera (119) und dem PSD (115) erfassten Winkel des Abtastspiegels (100) zu ermöglichen.

2. Vorrichtung nach Anspruch 1, die ferner ein Stellglied (111) zum Ansteuern der Objektlinse (109) umfasst, so dass der Brennpunkt der Objektlinse (109) auf den Abtastspiegel gesetzt werden kann.

3. Vorrichtung nach Anspruch 1 oder 2, die ferner einen Monitor (137) zum Anzeigen der von der Kamera (119) erfassten Zustände des Strahls umfasst.

4. Vorrichtung nach Anspruch 1, 2 oder 3, wobei die Steuerung ferner die Aufgabe hat, das Stellglied (111) auf der Basis des erfassten Zustands des Strahls zu steuern, so dass der Brennpunkt der Objektlinse (109) auf den Abtastspiegel gesetzt werden kann.

5. Vorrichtung nach einem der vorherigen Ansprüche, die ferner einen zweiten Strahlteiler (113) umfasst, der zwischen dem ersten Element (107) zum Ändern des Lichtwegs, dem lageempfindlichen Gerät (115) und der Kamera (119) angeordnet ist, um den vom Abtastspiegel (100) reflektierten Strahl zu dem lageempfindlichen Gerät und der Kamera (119) zu leiten.

6. Vorrichtung nach Anspruch 5, die ferner eine Kondensorlinse (117) umfasst, die zwischen dem zweiten Strahlteiler (113) und der Kamera (119) angeordnet ist, um den darauf fallenden Strahl zu kondensieren.

7. Vorrichtung nach einem der Ansprüche 1 bis 6, die ferner Folgendes umfasst:

   einen Kollimator (103) zum Kondensieren des von der Lichtquelle (100) ausgesendeten Strahls, um den Strahl parallel zu machen; und
   ein Pinhole (105), um den durch den Kollimator (103) geleiteten Strahl auf eine vorbestimmte Größe zu begrenzen.

8. Vorrichtung nach einem der Ansprüche 1 bis 7, wobei die Signalverarbeitungseinheit Folgendes umfasst:

   einen lageempfindlichen Geräteverstärker (121) zum Verstärken eines durch fotoelektrische Umwandlung in dem lageempfindlichen Gerät erhaltenen Signals, wobei der lageempfindliche Geräteverstärker (121) die Aufgabe hat, ein Feedback-Signal zu einer die Lichtquelle (101) ansteuernden Schaltung zu senden, um die Leistung des Strahls zu regeln; und
   eine Messeinheit (125) zum Empfangen eines Signalausgangs von dem lageempfindlichen Geräteverstärker (121) zum Messen der Ansteuerungseigenschaften des Abtastspiegels (100).

9. Vorrichtung nach Anspruch 8, wobei die Messeinheit (125) Folgendes umfasst:

   ein Oszilloskop (125a) zum Empfangen des Signalausgangs von dem lageempfindlichen Geräteverstärker (121) zum Messen der horizontalen und vertikalen Drehwinkel und des Zeitverhaltens des Abtastspiegels (100) anhand einer Wellenform des empfangenen Signals; und
   einen Signalanalysator (125b) zum Analysieren des Signalausgangs des lageempfindlichen Geräteverstärkers (121) zum Berechnen der horizontalen und vertikalen Resonanzfrequenzen und eines Q-Faktors des Abtastspiegels (100) .

10. Verfahren zum Beurteilen von Ansteuerungseigenschaften eines Scanners anhand von Änderungen der horizontalen und vertikalen Drehwinkel eines Abtastspiegels (100), wobei das Verfahren die folgenden Schritte beinhaltet:

    Kondensieren eines von einer Lichtquelle (101) auf den Abtastspiegel (100) ausgesendeten Strahls mit einer Objektlinse (109);
    Ansteuern der Objektlinse (109), um einen Brennpunkt der Objektlinse (109) auf den Abtastspiegel (100) zu setzen, um den vom Abtastspiegel (100) reflektierten Strahl so zu justieren, dass er zu dem von der Lichtquelle (101) ausgesendeten und auf die Objektlinse (109) fallenden Strahl parallel ist; und
    Empfangen des vom Abtastspiegel (100) reflektierten Strahls mit einem lageempfindlichen Gerät (115) und einer Kamera (119) zum Messen der Ansteuerungseigenschaften des Abtastspiegels (100), und **dadurch gekennzeichnet, dass** es ferner die folgenden Schritte beinhaltet: Justieren des Brennpunkts der Objektlinse (109) mittels eines Signalausgangs von der Kamera (119) als Reaktion auf den Strahl; und
    Kompensieren eines Messfehlers des PSD (115) durch Messen der Ansteuerungswinkel des Abtastspiegels (100) jeweils mit der Kamera (119) bzw. dem lageempfindlichen Gerät (115) und Kalibrieren der gemessenen Ansteuerungswinkel des Abtastspiegels (100) in einen tatsächlichen Ansteuerungswinkel des Abtastspiegels (100).

11. Verfahren nach Anspruch 10, wobei das Kompensieren des Messfehlers des lageempfindlichen Gerätes (115) ferner Folgendes beinhaltet:

    Kalibrieren der gemessenen Ansteuerungswinkel des Abtastspiegels (100) in einen tatsächlichen Ansteuerungswinkel des Abtastspiegels (100) mit einer Funktion erster Ordnung;

Vergleichen der ersten kalibrierten Werte der gemessenen Ansteuerungswinkel des Abtastspiegels (100) mit dem lageempfindlichen Gerät (115) und der Kamera (119), um zu ermitteln, ob der Messfehler des lageempfindlichen Gerätes (115) innerhalb eines vorbestimmten zulässigen Fehlerbereichs liegt; und

wenn der Messwert außerhalb des vorbestimmten zulässigen Fehlerbereichs liegt, Aktualisieren von Parametern der Funktion erster Ordnung und Wiederholen der Kalibrations- und vergleichsschritte.

**12.** Verfahren nach Anspruch 10 oder 11, wobei das Justieren des Brennpunkts der Objektlinse (109) Folgendes beinhaltet:

Gewinnen eines CCD-(ladungsgekoppeltes Bauelement)-Bildes durch Empfangen eines vom Abtastspiegel (100) reflektierten Strahls mit der Kamera (119);

Berechnen einer Mitte des gewonnenen CCD-Bildes und Lesen von Helligkeitsdaten von dem gewonnenen CCD-Bild;

Berechnen einer Standardabweichung der gelesenen Helligkeitsdaten durch Gauß'sche Anpassung, um zu ermitteln, ob der Brennpunkt der Objektlinse (109) auf dem Abtastspiegel (100) liegt; und

wenn der Brennpunkt der Objektlinse (109) nicht auf dem Abtastspiegel (100) liegt, Ansteuern der Objektlinse (109), um den Brennpunkt der Objektlinse (109) auf den Abtastspiegel (100) zu setzen.

**13.** Verfahren nach Anspruch 12, wobei das Justieren des Brennpunkts der Objektlinse (109) ferner das Abschalten eines Funktionsgenerators beinhaltet, um ein Ansteuerungssignal zum Abtastspiegel (100) vor dem Gewinnen des CCD-Bildes zu unterbrechen.

## Revendications

**1.** Appareil d'évaluation des caractéristiques de pilotage d'un scanner en fonction des changements des angles de rotation horizontale et verticale d'un miroir de balayage (100), l'appareil comprenant :

une source lumineuse (101) agencée pour émettre un faisceau lumineux;

un objectif (109) disposé entre le miroir de balayage (100) et la source lumineuse (101) et agencé de telle sorte qu'un foyer soit placé sur le miroir de balayage (100) ;

un dispositif sensible à la position (115), agencé pour recevoir le faisceau réfléchi par le miroir de balayage (100) et passant par l'objectif pour détecter les angles de rotation du miroir de balayage (10) ;

un premier diviseur de faisceau (107) disposé entre la source lumineuse (101) et l'objectif (109) pour changer le chemin optique du faisceau incident qui le frappe ; et

une unité de traitement de signal pour traiter un signal détecté par le dispositif sensible à la position (115), dans lequel le faisceau réfléchi par le miroir de balayage (100) et passant par l'objectif est agencé pour être parallèle au faisceau émis par la source lumineuse (101) et incident sur l'objectif quels que soient les angles de rotation du miroir de balayage (100), et

**caractérisé en ce qu'**il comprend en outre :

une caméra (119) agencée pour recevoir une partie du faisceau réfléchi par le miroir de balayage (100) et passant par l'objectif (109) pour détecter les états dynamique et statique du faisceau ; et

un module de commande agencé pour recevoir les états du faisceau détecté par la caméra (119) et pour détecter un angle de rotation du miroir de balayage (100), en permettant ainsi la mise au point de l'objectif (109) en fonction de l'état détecté du faisceau et la compensation de l'erreur de mesure du dispositif sensible à la position (115) en fonction des angles du miroir de balayage (100) détectés par la caméra (119) et le dispositif sensible à la position (115).

**2.** Appareil selon la revendication 1, comprenant en outre un actionneur (111) agencé pour piloter l'objectif (109) de telle sorte que le foyer de l'objectif (109) puisse être placé sur le miroir de balayage.

**3.** Appareil selon la revendication 1 ou 2, comprenant en outre :

un moniteur (137) agencé pour afficher les états du faisceau détectés par la caméra (119).

4. Appareil selon la revendication 1, 2 ou 3, dans lequel le module de commande est en outre agencé pour commander l'actionneur (111) en fonction de l'état détecté du faisceau de telle sorte que le foyer de l'objectif (109) puisse être placé sur le miroir de balayage.

5. Appareil selon l'une quelconque des revendications précédentes, comprenant en outre un deuxième diviseur de faisceau (113) disposé parmi le premier élément de changement de chemin optique (107), le dispositif sensible à la position (115), et la caméra (119) pour diriger le faisceau réfléchi par le miroir de balayage (100) vers le dispositif sensible à la position et la caméra (119).

6. Appareil selon la revendication 5, comprenant en outre une lentille de condensation (117) disposée entre le deuxième diviseur de faisceau (113) et la caméra (119) pour y condenser le faisceau.

7. Appareil selon l'une quelconque des revendications 1 à 6, comprenant en outre :

   un collimateur (103) agencé pour condenser le faisceau émis par la source lumineuse (100) pour rendre le faisceau parallèle ; et
   un trou d'épingle (105) agencé pour limiter le faisceau passant dans le collimateur (103) à une taille prédéterminée.

8. Appareil selon l'une quelconque des revendications 1 à 7, dans lequel l'unité de traitement du signal comprend :

   un amplificateur de dispositif sensible à la position (121) agencé pour amplifier un signal obtenu par conversion photoélectrique dans le dispositif sensible à la position, l'amplificateur de dispositif sensible à la position (121) étant agencé pour envoyer un signal de retour à un circuit pilotant la source lumineuse (101) pour commander la puissance du faisceau ; et
   une unité de mesure (125) agencée pour recevoir un signal de sortie de l'amplificateur de dispositif sensible à la position (121) afin de mesurer les caractéristiques de pilotage du miroir de balayage (100).

9. Appareil selon la revendication 8, dans lequel l'unité de mesure (125) comprend :

   un oscilloscope (125a) agencé pour recevoir le signal de sortie de l'amplificateur de dispositif sensible à la position (121) afin de mesurer les angles de rotation horizontale et verticale et une réponse de temps du miroir de balayage (100) en utilisant une forme d'onde du signal reçu ; et
   un analyseur de signal (125b) agencé pour analyser le signal de sortie de l'amplificateur de dispositif sensible à la position (121) pour calculer les fréquences de résonance horizontale et verticale et un facteur Q du miroir de balayage (100).

10. Procédé d'évaluation des caractéristiques de pilotage d'un scanner en fonction des changements des angles de rotation horizontale et verticale d'un miroir de balayage (100), le procédé comprenant les étapes consistant à :

    condenser un faisceau émis par une source lumineuse (101) sur le miroir de balayage (100) au moyen d'un objectif (109) ;
    piloter l'objectif (109) pour placer un foyer de l'objectif (109) sur le miroir de balayage (100) de manière à ajuster le faisceau réfléchi par le miroir de balayage (100) pour qu'il soit parallèle au faisceau émis par la source lumineuse (101) et incident sur l'objectif (109) ; et
    recevoir le faisceau réfléchi par le miroir de balayage (100) en utilisant un dispositif sensible à la position (115) et une caméra (119) pour mesurer les caractéristiques de pilotage du miroir de balayage (100) et **caractérisé en ce qu'**il comprend en outre les étapes consistant à : ajuster le foyer de l'objectif (109) en utilisant un signal de sortie de la caméra (119) en réponse au faisceau ; et
    compenser une erreur de mesure du dispositif sensible à la position (115) en mesurant les angles de pilotage du miroir de balayage (100) en utilisant la caméra (119) et le dispositif sensible à la position (115), respectivement, et en étalonnant les angles de pilotage mesurés du miroir de balayage (100) dans un angle de pilotage réel du miroir de balayage (100).

11. Procédé selon la revendication 10, dans lequel la compensation de l'erreur de mesure du dispositif sensible à la position (115) comprend en outre :

    l'étalonnage des angles de pilotage mesurés du miroir de balayage (100) dans un angle de pilotage réel du miroir de balayage (100) en utilisant une fonction de premier ordre ;

la comparaison des premières valeurs étalonnées des angles de pilotage mesurés du miroir de balayage (100) par le dispositif sensible à la position (115) et la caméra (119) pour déterminer si l'erreur de mesure du dispositif sensible à la position (115) est dans une plage d'erreur autorisée prédéterminée ; et

si l'erreur de mesure est extérieure à la plage d'erreur autorisée prédéterminée, la mise à jour des paramètres de la fonction de premier ordre et la répétition des étapes d'étalonnage et de comparaison.

12. Procédé selon la revendication 10 ou 11, dans lequel l'ajustement du foyer de l'objectif (109) comprend les étapes consistant à :

obtenir une image de dispositif à couplage de charge en recevant un faisceau réfléchi par le miroir de balayage (100) au moyen de la caméra (119) ;

calculer un centre de l'image de dispositif à couplage de charge obtenue et lire les données de luminosité de l'image de dispositif à couplage de charge obtenue ;

calculer un écart standard des données de brillance lues par un ajustement gaussien pour déterminer si le foyer de l'objectif (109) est placé sur le miroir de balayage (100) ; et

si le foyer de l'objectif (109) n'est pas placé sur le miroir de balayage (100), piloter l'objectif (109) pour placer le foyer de l'objectif (109) sur le miroir de balayage (100).

13. Procédé selon la revendication 12, dans lequel l'ajustement du foyer de l'objectif (109) comprend en outre la désactivation d'un générateur de fonction pour interrompre un signal de pilotage vers le miroir de balayage (100) avant d'obtenir l'image de dispositif à couplage de charge.

FIG. 1

EP 1 806 571 B1

# FIG. 2A

# FIG. 2B

# FIG. 3 (PRIOR ART)

FIG. 4A (PRIOR ART)

FIG. 4B (PRIOR ART)

# FIG. 5 (PRIOR ART)

# FIG. 6

EP 1 806 571 B1

# FIG. 7

# FIG. 8

# FIG. 9

# FIG. 10

# FIG. 11

```
┌─────────────────────┐
│ MEASURE ANGLE USING │── S10
│      PSD, CCD       │
└─────────────────────┘
          │
          ▼
┌─────────────────────┐
│ θm, PSD = a₁· θ + b₁│── S20
│ θm, CCD= a₂· θ + b₂ │
└─────────────────────┘
          │
          ▼
┌─────────────────────┐
│ MEASUREMENT ERROR   │── S30
│ = (θm, PSD − θm, CCD)²│
└─────────────────────┘
```

$$\theta_{m, PSD} = a_1 \cdot \theta + b_1$$
$$\theta_{m, CCD} = a_2 \cdot \theta + b_2$$

$$\text{MEASUREMENT ERROR} = (\theta_{m, PSD} - \theta_{m, CCD})^2$$

S50 — UPDATE $a_1$, $b_1$

S40 — MEASUREMENT ERROR IS WITHIN ALLOWABLE ERROR RANGE?

NO

YES

S60 — TERMINATE COMPENSATION FOR MEASUREMENT ERROR OF PSD

# FIG. 12

```
            ( START )
                │
                ▼
┌──────────────────────────────────┐
│   TURN OFF FUNCTION GENERATOR     │── S110
└──────────────────────────────────┘
                │
                ▼
┌──────────────────────────────────┐
│        OBTAIN CCD IMAGES          │── S120
└──────────────────────────────────┘
                │
                ▼
┌──────────────────────────────────┐
│   CALCULATE CENTER OF SPOT IMAGE  │── S130
└──────────────────────────────────┘
                │
                ▼
┌──────────────────────────────────┐
│      READ BRIGHTNESS DATA IN      │── S140
│   X-AXIS AND Y-AXIS DIRECTIONS    │
└──────────────────────────────────┘
                │
                ▼
┌──────────────────────────────────┐
│         GAUSSIAN FITTING          │── S150
└──────────────────────────────────┘
                │
                ▼
┌──────────────────────────────────┐        S180
│   CALCULATE GAUSSIAN STANDARD     │── S160  ┌────────────────────┐
│        DEVIATION(σ)               │        │  MOVE OBJECT LENS   │
└──────────────────────────────────┘        └────────────────────┘
                │                                       ▲
                ▼                 S170                  │
            ╱─────────────╲      NO                     │
           ╱   STANDARD    ╲─────────────────────────────
           ╲  DEVIATION(σ) IS ╱
            ╲   OPTIMAL?    ╱
             ╲─────────────╱
                │ YES
                ▼
             ( END )
```

FIG. 13

**EP 1 806 571 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6052197 A
- US 20030053742 A
- US 5604344 A